# EUROPÄISCHE PATENTSCHRIFT

(11) **EP 3 524 653 B1**
(45) Veröffentlichungstag und Bekanntmachung des Hinweises auf die Patenterteilung: **07.07.2021**
(21) Anmeldenummer: 18155909.7
(22) Anmeldetag: 09.02.2018
(51) Int. Cl.: C09J 9/02, H01B 1/22

(54) **ELEKTRISCH LEITFÄHIGE ZUSAMMENSETZUNG**
ELECTRICALLY CONDUCTIVE COMPOSITION
COMPOSITION ÉLECTRO-CONDUCTRICE

(43) Veröffentlichungstag der Anmeldung: 14.08.2019
(73) Patentinhaber: Heraeus Deutschland GmbH & Co. KG, 63450 Hanau (DE)
(72) Erfinder: STRÜBEN, Jan, 63450 Hanau (DE); FRITZSCHE, Sebastian, 63454 Hanau (DE); DICKEL, Tanja, 63543 Neuberg (DE); STAAB, Janine, 63768 Hösbach (DE)
(74) Vertreter: Heraeus IP

(56) Entgegenhaltungen:
- EP-A1- 3 093 319
- EP-A2- 0 971 009
- WO-A2-2011/003948

## Beschreibung

Die vorliegende Erfindung betrifft die Verwendung einer elektrisch leitfähigen Zusammensetzung, für Anwendungen in der Elektronik und Mikroelektronik. Sie kann insbesondere in solchen Elektronik- und Mikroelektronikanwendungen eingesetzt werden, bei denen Bauteile und/oder Substrate über eine Zinnkontaktfläche durch Verkleben mechanisch und elektrisch miteinander verbunden werden.

Im vorhergehenden Absatz werden die Begriffe "Elektronik" und "Mikroelektronik" verwendet. In der folgenden Beschreibung und in den Ansprüchen wird der Kürze halber der Begriff "Elektronik" verwendet. Er soll auch "Mikroelektronik" umfassen.

In der Beschreibung und in den Ansprüchen werden die Begriffe "Bauteil" und "Substrat" verwendet. Aus dem Zusammenhang wird der Fachmann verstehen, dass diese Begriffe insbesondere elektronische Bauteile und Substrate bedeuten, die im Folgenden näher erläutert werden.

In der Beschreibung und in den Ansprüchen wird der Begriff "Zinnkontaktfläche" verwendet. Er soll auch verzinnte Kontaktflächen und Kontaktflächen aus Zinnlegierungen (Legierungen mit einem Zinnanteil >50 Gewichts-%) umfassen. Daher bedeutet der hier verwendete Begriff "Zinnkontaktfläche" eine äußere Zinn- oder Zinnlegierungsoberfläche eines Bauteils oder eines Substrats, die als Kontaktfläche dient.

Elektronische Geräte benötigen elektrisch leitfähige Verbindungen zwischen Substraten und aktiven und/oder passiven Bauteilen. Solche Vorrichtungen werden zum Beispiel bei der Kommunikation (z. B. Mobiltelefone, Tablets und Computer), der Leistungselektronik (z.B. leistungselektronische Module) oder dergleichen verwendet. Es gibt zahlreiche Anforderungen, die ein leitfähiger Klebstoff in diesen Anwendungen erfüllen muss. Neben einer hohen mechanischen Stabilität (Haftkraft, ausgedrückt als Scherfestigkeit) sind eine hohe elektrische und thermische Leitfähigkeit und Kompatibilität mit einer Vielzahl von Substraten erforderlich.

Beispiele für vorerwähnte Substrate umfassen Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), IMS (isoliertes Metallsubstrat) und dergleichen.

Beispiele für vorerwähnte Bauteile umfassen Dioden, LEDs (Leuchtdioden), Chips, IGBTs (Bipolartransistoren mit isolierter Gate-Elektrode), MOSFETs (Metall-Oxid-Halbleiter-Feldeffekttransistoren), ICs (integrierte Schaltungen), Sensoren, Verbindungselemente (z. B. Clips), Kühlkörper, Bodenplatten, Widerstände, Kondensatoren, Induktoren und Antennen. Es ist sehr üblich, dass solche Bauteile und Substrate eine lötbare Zinnkontaktfläche aufweisen.

Es ist möglich, ein Bauteil über seine Zinnkontaktfläche und/oder über eine Zinnkontaktfläche des zu verbindenden Substrats mittels einer herkömmlichen elektrisch leitfähigen Klebstoffzusammensetzung auf dem Substrat zu fixieren. Eine derartige Klebeverbindung zu einer Zinnkontaktfläche oder zwischen zwei Zinnkontaktflächen wird mit der Zeit schwächer und ihr elektrischer Widerstand steigt an, insbesondere nachdem die Klebeverbindung eine bestimmte Anzahl von Temperaturänderungen erfahren hat. Solche Temperaturänderungen können im Labor durch konventionelle Temperatur-Cycling-Tests (TCT) simuliert werden.

Bislang wurde das vorgenannte Problem gelöst, indem Bauteile und Substrate mit Kontaktflächen aus anderen Materialien als Zinn, beispielsweise aus Silber, Nickel, Gold oder Kupfer, verwendet wurden. Jedoch ist es nicht zuletzt aus Kostengründen wünschenswert, mit Bauteilen und/oder Substraten vom Zinnkontaktflächen-Typ unabhängig vom Befestigungsverfahren, d.h. Verlöten oder Verkleben, zu arbeiten.

Es besteht daher der Wunsch, eine elektrisch leitfähige Klebstoffzusammensetzung bereitzustellen, die hinsichtlich ihrer Haftfestigkeit (Langzeithaftung) und elektrischen Eigenschaften von Verklebungen von Bauteilen mit Zinnkontaktfläche und/oder Substraten mit Zinnkontaktfläche verbessert ist, insbesondere wenn solche Bauteile und/oder Substrate während ihres Gebrauchszeitraums Temperaturänderungen erfahren.

Die Erfindung betrifft die Verwendung einer elektrisch leitfähigen Zusammensetzung enthaltend die Bestandteile:
(A1a) 30 bis 50 Gew.-% (Gewichts-%) elektrisch leitfähige Partikel mit einer durchschnittlichen Partikelgröße im Bereich von 1 bis 25 µm und einem Aspektverhältnis im Bereich von 5 bis 30 : 1 und (A1b) 20 bis 60 Gew.-% nichtmetallische Partikel mit einer durchschnittlichen Partikelgröße im Bereich von 1 bis 25 µm und einem Aspektverhältnis im Bereich von 1 bis 3 : 1
   oder
(A2a) 70 bis 90 Gew.-% elektrisch leitfähige Partikel und (A2b) 0 bis 15 Gew.-% nichtmetallische Partikel,
(B) 5 bis 25 Gew.-% von (A1a) und (A2a) verschiedener Partikel aus einer im Bereich von 50 bis 180°C schmelzenden Legierung enthaltend Indium und/oder Zinn,
(C) 5 bis 25 Gew.-% eines härtbaren Harzsystems, und
(D) 0 bis 10 Gew.-% mindestens eines Additivs, zur Verklebung eines Bauteils mit einem Substrat über deren Kontaktflächen, wobei mindestens eine der Kontaktflächen eine Zinnkontaktfläche ist, und wobei die elektrisch leitfähige Zusammensetzung frei von Substanzen mit einer oder mehreren Cyanatgruppen (Cyanatestergruppen) ist.

In der Beschreibung und den Ansprüchen wird der Begriff "durchschnittliche Partikelgröße" verwendet. Er bedeutet die mittlere Primärpartikelgröße (mittlerer Partikeldurchmesser, d50), die mittels Laserbeugung bestimmt werden kann. Laserbeugungsmessungen können unter Verwendung eines Partikelgrößenanalysators, beispielsweise eines Mastersizer 3000 von Malvern Instruments, durchgeführt werden.

In der Beschreibung und den Ansprüchen wird der Ausdruck "Aspektverhältnis" in Bezug auf die Form der Partikel (A1a) und (A1b) verwendet, die in der erfindungsgemäßen elektrisch leitfähigen Zusammensetzung enthalten sind. Das Aspektverhältnis kann durch Rasterelektronenmikroskopie und Auswertung der elektronenmikroskopischen Bilder durch Messung der Abmessungen einer statistisch bedeutsamen Anzahl von einzelnen Partikeln bestimmt werden.

Diese Offenbarung unterscheidet zwischen verschiedenen Bestandteilen mit den Bezeichnungen (A1a), (A1b), (A2a), (A2b), (B), (C) und (D), d.h. jede zu einer Kategorie dieser Bestandteile gehörende Substanz oder Material kann nicht gleichzeitig auch einer anderen Kategorie angehören.

In einer Ausführungsform kann die Summe der Gew.-% von (A1a), (A1b), (B), (C), und, falls vorhanden, (D) oder (A2a), (B), (C) und, falls vorhanden, (A2b) und (D) jeweils insgesamt 100 Gew.-% der elektrisch leitfähigen Zusammensetzung ausmachen, d.h. die elektrisch leitfähige Zusammensetzung kann aus (A1a), (A1b), (B), (C), und, falls vorhanden, (D) oder (A2a), (B), (C) und, falls vorhanden, (A2b) und (D) bestehen.

Die in der Beschreibung und den Ansprüchen offenbarten Gew.-% beziehen sich auf die elektrisch leitfähige Zusammensetzung, d.h. noch nicht gehärtet, oder noch genauer, auf die elektrisch leitfähige Zusammensetzung vor ihrer Verwendung oder Anwendung.

Bei Bestandteil (A) der elektrisch leitfähigen Zusammensetzung handelt es sich entweder um den Bestandteil (A1) umfassend (A1a) und (A1b) oder um den Bestandteil (A2) umfassend (A2a) und gegebenenfalls (A2b).

Konkret umfasst die elektrisch leitfähige Zusammensetzung (A1a) 30 bis 50 Gew.-% elektrisch leitfähige Partikel mit einer durchschnittlichen Partikelgröße im Bereich von 1 bis 25 µm, bevorzugt 1 bis 20 µm, am meisten bevorzugt 1 bis 15 µm, und einem Aspektverhältnis im Bereich von 5 bis 30 : 1, bevorzugt 6 bis 20 : 1, insbesondere 7 bis 15 : 1 und (A1b) 20 bis 60 Gew.-% nichtmetallische Partikel mit einer durchschnittlichen Partikelgröße im Bereich von 1 bis 25 µm und einem Aspektverhältnis im Bereich von 1 bis 3 : 1 oder, in einer anderen Ausführungsform, (A2a) 70 bis 90 Gew.-% elektrisch leitfähige Partikel und (A2b) 0 bis 15 Gew.-%, bevorzugt 0 Gew.-% nichtmetallische Partikel.

Eine erste Gruppe elektrisch leitfähiger Partikel (A1a) umfasst metallische Partikel. Das Metall oder die Metalllegierung der metallischen Partikel hat eine elektrische Leitfähigkeit von beispielsweise >10⁷ S/m. Beispiele für geeignete Metall(legierungs)-Partikel umfassen Silber(legierungs)-Partikel, Gold(legierungs)-Partikel, Aluminium(legierungs)-Partikel und Kupfer(legierungs)-Partikel.

Eine zweite Gruppe elektrisch leitfähiger Partikel (A1a) umfasst Partikel, die mit einem Metall oder einer Metalllegierung beschichtet sind, insbesondere mit einem Metall mit einer elektrischen Leitfähigkeit von beispielsweise >10⁷ S/m. Beispiele umfassen metallbeschichtete Metallpartikel, z.B. mit Silber beschichtete Kupferpartikel und metallbeschichtete Glaspartikel, z.B. mit Silber beschichtete Glaspartikel.

Die Partikel (A1a) weisen ein Aspektverhältnis im Bereich von 5 bis 30 : 1, bevorzugt 6 bis 20 : 1, am meisten bevorzugt 7 bis 15 : 1 auf. Das Aspektverhältnis bedeutet, dass die Partikel (A1a) beispielsweise nadelförmige Partikel (Nadeln) oder Flocken (Plättchen, Flakes) sind, im Gegensatz zu beispielsweise Partikeln mit einer sphärischen, einer im Wesentlichen sphärischen, einer elliptischen oder einer eiförmigen Form. Ideal kugelförmige Partikel haben ein Aspektverhältnis von 1 : 1. Die elektrisch leitfähige Zusammensetzung kann eine oder mehrere verschiedene Arten von Partikeln (A1a) umfassen. In jedem Fall erfüllen alle Arten von Partikeln (A1a) die vorstehend erwähnten Bedingungen bezüglich mittlerer Partikelgröße und des Aspektverhältnisses. Um dies zu veranschaulichen, kann das folgende theoretische Beispiel in Betracht gezogen werden: Eine elektrisch leitfähige Zusammensetzung kann zwei verschiedene Arten von Silberpartikeln als die einzigen Partikel (A1a) umfassen, nämlich X Gew.-% Silberpartikel mit einem d50-Wert von x µm und einem Aspektverhältnis von y : 1 und Y Gew.-% Silberpartikel mit einem d50-Wert von v µm und einem Aspektverhältnis von w : 1, wobei X + Y in dem genannten Bereich von 30 bis 50 Gew.-% liegt, x und v unabhängig voneinander im Bereich von 1 bis 25 µm liegen und y und w unabhängig voneinander im Bereich von 5 bis 30 : 1 liegen.

Partikel des Typs (A1a) sind im Handel erhältlich. Beispiele für solche Partikel umfassen NZS-610, SF-3, SF-3J von Ames Goldsmith; TSC-10F20A, TSC-10F20B, TSC-10F20C von Chang Sung; Silver Flake # 80 von Ferro; RA-0101, AA-192N, SA 4084, P 54314 von Metalor.

Nichtmetallische Partikel (A1b) weisen eine mittlere Partikelgröße auf im Bereich von 1 bis 25 µm, bevorzugt 1 bis 20 µm, insbesondere 1 bis 15 µm und ein Aspektverhältnis im Bereich von 1 bis 3 : 1, bevorzugt 1 bis 2 : 1, am meisten bevorzugt 1 bis 1,5 : 1. Beispiele für geeignete Partikel vom Typ (A1b) umfassen Graphitpartikel und elektrisch nicht leitfähige nichtmetallische Partikel, die jeweils die Bedingungen der mittleren Partikelgröße und des Aspektverhältnisses erfüllen. Der hier verwendete Ausdruck "elektrisch nicht leitfähige nichtmetallische Partikel" soll nichtmetallische Partikel eines Materials mit einer elektrischen Leitfähigkeit von <10⁵ S/m bedeuten. Beispiele für solche Materialien umfassen Glas, Keramik, Kunststoffe, Diamant, Bornitrid, Siliziumdioxid, Siliziumnitrid, Siliziumcarbid, Alumosilikat, Aluminiumoxid, Aluminiumnitrid, Zirkoniumoxid und Titandioxid.

Die nichtmetallischen Partikel (A1b) weisen ein Aspektverhältnis im Bereich von 1 bis 3 : 1, bevorzugt 1 bis 2 : 1, insbesondere 1 bis 1,5 : 1 auf. Das Aspektverhältnis bedeutet, dass die nichtmetallischen Partikel (A1b) im Gegensatz zu Partikeln wie beispielsweise nadelförmigen Partikeln oder Flocken eine echte sphärische oder im Wesentlichen sphärische Form haben. Die einzelnen Partikel (A1b) haben, wenn sie unter einem Elektronenmikroskop betrachtet werden, eine zumindest kugelähnliche, d.h. sie können vollkommen rund oder fast rund, elliptisch oder eiförmig sein.

Die elektrisch leitfähige Zusammensetzung kann eine oder mehrere verschiedene Arten von Partikeln (A1b) umfassen. In jedem Fall erfüllen alle Arten von Partikeln (A1b) die vorstehend erwähnten Bedingungen für die mittlere Partikelgröße und das Aspektverhältnis. Partikel des Typs (A1b) sind im Handel erhältlich. Beispiele sind AE9104 von Admatechs; EDM99,5 von AMG Mining; CL4400, CL3000SG von Almatis; Glaskugeln von Sigma Aldrich; Spheromers® CA6, CA10, CA15 von Microbeads®.

Eine erste Gruppe elektrisch leitfähiger Partikel (A2a) umfasst metallische Partikel. Das Metall oder die Metalllegierung der metallischen Partikel hat eine elektrische Leitfähigkeit von beispielsweise >10⁷ S/m. Beispiele für geeignete Metall(legierungs)-Partikel umfassen Silber(legierungs)-Partikel, Gold(legierungs)-Partikel, Aluminium(legierungs)-Partikel und Kupfer(legierungs)-Partikel.

Eine zweite Gruppe elektrisch leitfähiger Partikel (A2a) umfasst Partikel, die mit einem Metall oder einer Metalllegierung beschichtet sind, insbesondere mit einem Metall mit einer elektrischen Leitfähigkeit beispielsweise >10⁷ S/m. Beispiele umfassen metallbeschichtete Metallpartikel, z.B. mit Silber beschichtete Kupferpartikel und metallbeschichtete Glaspartikel, z.B. mit Silber beschichtete Glaspartikel.

Die elektrisch leitfähigen Partikel (A2a) können eine beliebige Form haben. Flocken und sphärische Partikel sind bevorzugt. Die mittlere Partikelgröße der elektrisch leitfähigen Partikel (A2a) liegt im Bereich von beispielsweise 1 bis 15 µm.

Die elektrisch leitfähige Zusammensetzung kann eine oder mehrere verschiedene Arten von Partikeln (A2a) umfassen. Zum Beispiel kann die elektrisch leitfähige Zusammensetzung eine Art von Partikeln (A2a) oder eine Kombination von verschiedenen Arten von Partikeln (A2a) umfassen.

Partikel des Typs (A2a) sind im Handel erhältlich. Beispiele für solche Partikel umfassen NZS-610, SF-3, SF-3J von Ames Goldsmith; TSC-10F20A, TSC-10F20B, TSC-10F20C von Chang Sung; Silberflake # 80, EG-ED-SF von Ferro; RA-0101, P 543-14, P408-4, P582-5, AA-192N von Metalor.

Die elektrisch leitfähige Zusammensetzung kann eine oder mehrere verschiedene Arten von Partikeln (A2b) umfassen. Die mittlere Partikelgröße der nichtmetallischen Partikel (A2b) liegt im Bereich von beispielsweise 1 bis 25 µm, bevorzugt 1 bis 20 µm, am meisten bevorzugt 1 bis 15 µm.

Beispiele für geeignete Partikel vom Typ (A2b) umfassen Graphitpartikel und elektrisch nicht leitfähige nichtmetallische Partikel. Der hier verwendete Ausdruck "elektrisch nicht leitfähige nichtmetallische Partikel" soll nichtmetallische Partikel eines Materials mit einer elektrischen Leitfähigkeit von <10⁵ S/m bedeuten. Beispiele für solche Materialien umfassen Glas, Keramik, Kunststoffe, Diamant, Bornitrid, Siliziumdioxid, Siliziumnitrid, Siliziumcarbid, Alumosilikat, Aluminiumoxid, Aluminiumnitrid, Zirkoniumoxid und Titandioxid.

Partikel des Typs (A2b) sind im Handel erhältlich. Beispiele sind AE9104 von Admatechs; EDM99,5 von AMG Mining; CL4400, CL3000SG von Almatis; Glaskugeln von Sigma Aldrich; und Spheromers® CA6, CA10, CA15 von Microbeads®.

Die elektrisch leitfähige Zusammensetzung kann eine oder mehrere verschiedene Arten von von Partikeln der Typen (A1a) und (A2a) verschiedenen Partikeln (B) aus einer im Bereich von 50 bis 180°C schmelzenden Indium und/oder Zinn enthaltenden Legierung umfassen. Die Legierungspartikel des Typs (B) schmelzen im Bereich von 50 bis 180°C, bevorzugt 50 bis 150°C. Die Partikel (B) sind bevorzugt sphärisch. Die mittlere Partikelgröße der Partikel (B) liegt beispielsweise im Bereich von 1 bis 15 µm. Vorzugsweise handelt es sich bei den Partikeln (B) um Lotlegierungskugeln, beispielsweise solche vom Typ 6, 7 und/oder 8, bevorzugt solche vom Typ 7 gemäß der Norm J-STD-005.

Die Legierungen der Partikel (B) enthalten Indium und/oder Zinn beispielsweise in einem Gesamtmengenanteil von 30 bis 100 Gew.-%. Bevorzugt enthalten sie Zinn.

Beispiele für geeignete Legierungen umfassen Bi33.7In66.3 (Schmelztemperatur 72°C), Bi67In33 (Schmelztemperatur 109°C), Sn48In52 (Schmelztemperatur 117°C), Sn50In50 (Schmelztemperatur 120°C), Sn52In48 (Schmelztemperatur 123 °C), Sn58In42 (Schmelztemperatur 142°C), In97Ag3 (Schmelztemperatur 144°C), Bi40Sn60 (Schmelztemperatur 150°C) und insbesondere Bi32.5Sn16.5In51 (Schmelztemperatur 62°C), Bi57Sn17In26 (Schmelztemperatur 79°C) und Bi58Sn42 (Schmelztemperatur 137°C).

Das härtbare Harzsystem (C) umfasst diejenigen Bestandteile der elektrisch leitfähigen Zusammensetzung, die nach dem Auftragen und Härten eine kovalent vernetzte Polymermatrix bilden, in die die Partikel der elektrisch leitfähigen Zusammensetzung eingebettet sind.

Härtbares Harzsystem bedeutet ein Harzsystem, umfassend mindestens ein selbstvernetzbares Harz, typischerweise in Kombination mit einem Starter oder Initiator, und/oder ein oder mehrere vernetzbare Harze in Kombination mit einem oder mehreren Härtern (Vernetzer, Härtungsmittel) für das oder die vernetzbaren Harze. Jedoch ist auch die Anwesenheit von nichtreaktiven Harzen in einem solchen härtbaren Harzsystem (C) möglich.

Um Missverständnisse zu vermeiden, der Begriff "Harzsystem" soll, obwohl er sich nach allgemeinem Verständnis auf polymere Materialien bezieht, nicht dahingehend verstanden werden, dass er die optionale Anwesenheit oligomerer Materialien ausschließt. Oligomere Materialien können reaktive Verdünner (reaktive Verdünnungsmittel) einschließen. Die Grenze zwischen oligomeren und polymeren Materialien ist definiert durch das Gewichtsmittel der Molmasse, bestimmt durch Gelpermeationschromatographie (GPC; Divinylbenzol-vernetztes Polystyrol als immobile Phase, Tetrahydrofuran als flüssige Phase, Polystyrolstandards). Oligomere Materialien können ein Gewichtsmittel der Molmasse von beispielsweise ≤ 500 aufweisen, während das Gewichtsmittel der Molmasse von Polymermaterialien typischerweise beispielsweise > 500 ist.

Typischerweise sind die Bestandteile des härtbaren Harzsystems (C) nicht flüchtig; jedoch können auch flüchtige Verbindungen vorhanden sein, die am Härtungsmechanismus des härtbaren Harzsystems (C) beteiligt sein können.

Das härtbare Harzsystem (C) ist durch Bildung kovalenter Bindungen härtbar. Kovalente Bindungen bildende Härtungsreaktionen können radikalische Polymerisations-, Kondensations- und/oder Additionsreaktionen sein, wobei Kondensationsreaktionen weniger bevorzugt sind.

Wie bereits zuvor erwähnt, umfasst das härtbare Harzsystem (C) diejenigen Bestandteile der elektrisch leitfähigen Zusammensetzung, die nach deren Applikation und Härtung eine kovalent vernetzte Polymermatrix oder Polymernetzwerk bilden. Diese Polymermatrix kann von beliebigem Typ sein, d.h. sie kann ein oder mehrere Polymere oder einen oder mehrere Hybride von zwei oder mehreren verschiedenen Polymeren umfassen. Beispiele für mögliche Polymere können (Meth)acrylcopolymere, Polyester, Polyurethane, Polysiloxane, Polyether, Epoxy-Amin-Polyaddukte und beliebige Kombinationen einschließen. Die Polymere, die die Polymermatrix bilden, können aus polymeren Komponenten des härtbaren Harzsystems (C) stammen und/oder sie können während Polymer bildenden Härtungsreaktionen des härtbaren Harzsystems (C) nach dem Auftragen und während des Härtens der elektrisch leitfähigen Zusammensetzung gebildet werden.

Daher können das oder die Harze, die Bestandteile des härtbaren Harzsystems (C) sein können, ausgewählt sein aus beispielsweise (Meth)acrylcopolymerharzen, Polyesterharzen, Polyurethanharzen, Polysiloxanharzen, Polyetherharzen einschließlich Polyether vom Epoxyharztyp, Epoxy-Amin-Polyaddukten und Hybriden davon.

Selbstvernetzbare Harze des härtbaren Harzsystems (C) können Harze sein, die funktionelle Gruppen tragen, die unter Bildung von kovalenten Bindungen im Sinne der Bildung vernetzter Netzwerke untereinander reagieren können. Alternativ sind selbstvernetzbare Harze, die unterschiedliche funktionelle Gruppen (F1) und (F2) in ein und demselben Molekül tragen, wobei die funktionellen Gruppen (F2) eine reaktive Funktionalität komplementär zur Funktionalität der funktionellen Gruppen (F1) aufweisen. Die Kombination eines vernetzbaren Harzes mit einem Härter bedeutet, dass das vernetzbare Harz funktionelle Gruppen (F1) trägt, während der Härter andere funktionelle Gruppen (F2) trägt, die eine zur Funktionalität der funktionellen Gruppen (F1) komplementäre reaktive Funktionalität aufweisen. Beispiele für solche komplementäre Funktionalitäten (F1)/(F2) sind: Carboxyl/Epoxy, Epoxy/Amin, radikalisch polymerisierbare olefinische Doppelbindung/radikalisch polymerisierbare olefinische Doppelbindung und dergleichen.

Die Reaktion der komplementären Funktionalitäten (F1)/(F2) führt in jedem Fall zur Bildung kovalenter Bindungen mit dem Resultat der Bildung eines kovalent vernetzten Polymernetzwerkes.

In einer bevorzugten Ausführungsform umfasst das härtbare Harzsystem (C) ein selbstvernetzbares Epoxidharz oder ein System aus Epoxidharz und Härter für das Epoxidharz ausgewählt unter Polyaminhärtern, Polycarbonsäure-Härtern und Polycarbonsäureanhydrid-Härtern. Das System aus Epoxidharz und Polyaminhärter für das Epoxidharz kann gegebenenfalls Lacton umfassen.

Ein härtbares Harzsystem (C), das ein selbstvernetzbares Epoxidharz umfasst, kann einen Starter oder einen Initiator umfassen. Es kann ein kationisch härtbares System sein. Um die kationische Härtung zu initiieren, benötigt es einen kationischen Initiator, der thermo- oder UV-labil sein kann.

Daher kann ein kationisch härtbares Harzsystem (C), das ein selbstvernetzbares Epoxidharz umfasst, ein thermisch härtbares oder ein UV-härtbares Harzsystem sein.

Beispiele für geeignete Epoxidharze sind Bisphenol-A- und/oder Bisphenol-F-Epoxidharze, Novolak-Epoxidharze, aliphatische Epoxidharze und cycloaliphatische Epoxidharze. Beispiele für solche im Handel erhältliche Epoxidharze umfassen Araldite® GY 279, Araldite® GY 891, Araldite® PY 302-2, Araldite® PY 3483, Araldite® GY 281 und Quatrex® 1010 von Huntsman; D.E.R.TM 331, D.E.R.TM 732, D.E.R.TM 354 und D.E.NTM 431 von Dow Chemical; JER YX8000 von Mitsubishi Chemical; und EPONEX™ Resin 1510 von Momentive Specialty Chemicals.

Beispiele für geeignete Polyaminhärter umfassen solche mit ≥ 1 primären respektive sekundären Aminogruppen pro Molekül. Typische Beispiele sind Diamine, Triamine und andere Polyamine mit mindestens zwei Aminogruppen im Molekül, wobei die Aminogruppen unter primären und sekundären Aminogruppen ausgewählt sind. Sekundäre Aminogruppen können als laterale oder endständige funktionelle Gruppen oder als Glied eines heterocyclischen Rings vorliegen. Beispiele für Polyaminhärter umfassen Diethylentriamin, Ethylendiamin, Triethylentetramin, Aminoethylpiperazin, Jeffamine® D230 von Huntsman und heterocyclische Polyaminhärter wie Imidazolderivate.

Beispiele für geeignete Polycarbonsäure-Härter umfassen Methylhexahydrophthalsäure und ihre möglichen Anhydride.

Beispiele für geeignete Lactone sind Delta-Valerolacton, Delta-Hexalacton, Delta-Nonalacton, Delta-Decalacton, Delta-Undecalacton, Gamma-Butyrolacton, Gamma-Hexalacton, Gamma-Heptalacton, Gamma-Octalacton, Epsilon-Caprolacton, Epsilon-Octalacton, Epsilon-Nonalacton und Mischungen davon.

Die elektrisch leitfähige Zusammensetzung enthält 0 bis 10 Gew.-% mindestens eines Additivs (D). Beispiele für Additive (D) umfassen 1,4-Cyclohexandimethanol-Divinylether; organische Lösungsmittel wie zum Beispiel Isopropanol, Terpineol; Benetzungsmittel wie zum Beispiel Ölsäure; Rheologiesteuerer wie zum Beispiel Ethylcellulose.

Die elektrisch leitfähige Zusammensetzung kann durch Mischen der Bestandteile vom Typ (A) bis (D) hergestellt werden, wobei es bevorzugt ist, Bestandteil (C) vorzulegen vor Zugabe partikelförmiger Bestandteile. Nach Beendigung des Mischens kann die so hergestellte elektrisch leitfähige Zusammensetzung bis zu ihrer Verwendung oder Anwendung gelagert werden. Es kann vorteilhaft sein, die elektrisch leitfähige Zusammensetzung bei niedrigen Temperaturen von beispielsweise -78 bis +8 ° C zu lagern.

In Abhängigkeit von der chemischen Natur der Komponente (C) und, falls gewünscht oder zweckmäßig, ist es auch möglich, die Komponente (C) in Teilkomponenten aufzuspalten, beispielsweise in eine härtbare Harzkomponente (C1) und eine Härterkomponente (C2), und beispielsweise die Bestandteile vom Typ (A), (B), (C1) und gegebenenfalls (D) zu vermischen und diese Mischung getrennt von (C2) zu lagern. Auf diese Weise kann ein Zweikomponenten-Typ einer elektrisch leitfähigen Zusammensetzung erhalten werden. Seine zwei Komponenten werden getrennt voneinander bis zur Verwendung oder Anwendung der elektrisch leitfähigen Zusammensetzung gelagert. Die zwei Komponenten werden dann kurz oder unmittelbar vor der Anwendung gemischt.

Die elektrisch leitfähige Zusammensetzung kann als elektrisch leitfähige Klebstoffzusammensetzung verwendet werden, insbesondere für Elektronik-Anwendungen. Zu diesem Zweck wird die elektrisch leitfähige Zusammensetzung auf die Kontaktfläche eines zu verklebenden Teils aufgebracht. Beispiele für solche Teile sind die vorerwähnten Substrate und Bauteile. Wie bereits erwähnt, hat es sich gezeigt, dass die elektrisch leitfähige Zusammensetzung einen besonderen Vorteil aufweist, wenn mindestens eines der Teile, die mit einem anderen (d.h. Bauteil und/oder Substrat) klebend verbunden werden sollen, eine Zinnkontaktfläche aufweist.

Die Applikation der elektrisch leitfähigen Zusammensetzung kann zum Beispiel durch Drucken, z.B. Siebdruck oder Schablonendruck, Sprühen, Jetten oder Dispensen erfolgen. Die typische Dicke der aufgebrachten und ungehärteten elektrisch leitfähigen Zusammensetzung liegt im Bereich von beispielsweise 5 bis 50 µm.

Nach der Applikation kann ein Trocknungsschritt durchgeführt werden, um eventuell vorhandene flüchtige Verbindungen, wie beispielsweise organisches Lösungsmittel, zu entfernen. Wenn ein solcher Trocknungsschritt durchgeführt wird, betragen die Trocknungsparameter beispielsweise 1 bis 120 Minuten bei einer Objekttemperatur von beispielsweise 50 bis 160 °C.

Nach dem Auftrag und der optionalen Trocknung wird das andere zu verklebende Teil mit seiner Kontaktfläche auf die Schicht aus elektrisch leitfähigem Kleber gelegt. Die so gebildete Anordnung, die aus den Teilen mit der Schicht der elektrisch leitfähigen Zusammensetzung dazwischen besteht, wird dann gehärtet. Die Härtung kann durch UV-Bestrahlung initiiert werden, beispielsweise wenn mindestens eines der zu verklebenden Teile für UV-Licht transparent ist und die Härtungschemie des (C)-Systems eine UV-Härtung ermöglicht. Beispiele für UV-härtbare (C)-Systeme sind das bereits erwähnte härtbare Harzsystem (C) enthaltend ein selbstvernetzbares Epoxidharz und einen UV-labilen kationischen Initiator oder ein härtbares Harzsystem (C) enthaltend radikalisch polymerisierbare Komponenten und einen UV-labilen frei radikalischen Initiator.

Bei der gebräuchlicheren Alternative der thermischen Aushärtung wird Wärme angewendet, und die elektrisch leitfähige Zusammensetzung oder die Anordnung wird zum Beispiel für 5 bis 30 Minuten auf eine Objekttemperatur von beispielsweise 80 bis 160 °C erhitzt.

Eine weitere Ausführungsform der Erfindung ist eine gehärtete Zusammensetzung, die durch Härten der härtbaren elektrisch leitfähigen Zusammensetzung erhältlich ist. Daher ist auch ein Aufbau, bei dem sich die elektrisch leitfähige Zusammensetzung in einem gehärteten Zustand befindet, Teil der Erfindung. Mit anderen Worten ist eine weitere Ausführungsform der Erfindung eine Anordnung, die ein Substrat, die gehärtete elektrisch leitfähige Zusammensetzung und ein Bauteil umfasst. Die gehärtete elektrisch leitfähige Zusammensetzung dient als elektrisch leitfähiger Klebstoff und befindet sich daher zwischen dem Substrat und dem Bauteil oder, genauer gesagt, zwischen der Kontaktfläche des Substrats und der des Bauteils, wobei in einer Ausführungsform mindestens eine der Kontaktflächen eine Zinnkontaktfläche ist.

Eine weitere Ausführungsform der Erfindung ist die Verwendung der elektrisch leitfähigen Zusammensetzung als härtbarer elektrisch leitfähiger Klebstoff, insbesondere in Elektronikanwendungen, insbesondere zur Verklebung eines Bauteils mit einem Substrat über deren Kontaktflächen, wobei mindestens eine der Kontaktflächen eine Zinnkontaktfläche ist.

## Patentansprüche

1. Verwendung einer elektrisch leitfähigen Zusammensetzung enthaltend die Bestandteile:
(A1a) 30 bis 50 Gew.-% elektrisch leitfähige Partikel mit einer durchschnittlichen Partikelgröße im Bereich von 1 bis 25 µm und einem Aspektverhältnis im Bereich von 5 bis 30 : 1 und (A1b) 20 bis 60 Gew.-% nichtmetallische Partikel mit einer durchschnittlichen Partikelgröße im Bereich von 1 bis 25 µm und einem Aspektverhältnis im Bereich von 1 bis 3 : 1
oder
(A2a) 70 bis 90 Gew.-% elektrisch leitfähige Partikel und (A2b) 0 bis 15 Gew.-% nichtmetallische Partikel,
(B) 5 bis 25 Gew.-% von (A1a) und (A2a) verschiedener Partikel aus einer im Bereich von 50 bis 180°C schmelzenden Legierung enthaltend Indium und/oder Zinn,
(C) 5 bis 25 Gew.-% eines härtbaren Harzsystems, und
(D) 0 bis 10 Gew.-% mindestens eines Additivs,
zur Verklebung eines Bauteils mit einem Substrat über deren Kontaktflächen,
wobei mindestens eine der Kontaktflächen eine Zinnkontaktfläche ist, und
wobei die elektrisch leitfähige Zusammensetzung frei von Substanzen mit einer oder mehreren Cyanatgruppen ist.

2. Verwendung gemäß Anspruch 1, wobei sich die Gew.-% zu 100 Gew.-% addieren.

3. Verwendung gemäß Anspruch 1 oder 2, wobei die elektrisch leitfähigen Partikel (A1a) ausgewählt sind aus der Gruppe bestehend aus Silber(legierungs)-Partikeln, Gold(legierungs)-Partikeln, Aluminium(legierungs)-Partikeln, Kupfer(legierungs)-Partikeln, metallbeschichteten Metallpartikeln und metallbeschichteten Glaspartikeln.

4. Verwendung gemäß Anspruch 1, 2 oder 3, wobei die nichtmetallischen Partikel (A1b) ausgewählt sind aus der Gruppe bestehend aus Partikeln aus Glaspartikeln, Keramikpartikeln, Kunststoffpartikeln, Diamantpartikeln, Bornitridpartikeln, Siliziumdioxidpartikeln, Siliziumnitridpartikeln, Siliziumcarbidpartikeln, Alumosilikatpartikeln, Aluminiumoxidpartikeln, Aluminiumnitridpartikeln, Zirkoniumoxidpartikeln und Titandioxidpartikeln.

5. Verwendung gemäß Anspruch 1 oder 2, wobei die elektrisch leitfähigen Partikel (A2a) ausgewählt sind aus der Gruppe bestehend aus Silber(legierungs)-Partikeln, Gold(legierungs)-Partikeln, Aluminium(legierungs)-Partikeln, Kupfer(legierungs)-Partikeln, metallbeschichteten Metallpartikeln und metallbeschichteten Glaspartikeln.

6. Verwendung gemäß Anspruch 1, 2 oder 5, wobei die nichtmetallischen Partikel (A2b) ausgewählt sind aus der Gruppe bestehend aus Partikeln aus Glaspartikeln, Keramikpartikeln, Kunststoffpartikeln, Diamantpartikeln, Bornitridpartikeln, Siliziumdioxidpartikeln, Siliziumnitridpartikeln, Siliziumcarbidpartikeln, Alumosilikatpartikeln, Aluminiumoxidpartikeln, Aluminiumnitridpartikeln, Zirkoniumoxidpartikeln und Titandioxidpartikeln.

7. Verwendung gemäß einem der vorhergehenden Ansprüche, wobei die Partikel (B) eine mittlere Partikelgröße im Bereich von 1 bis 15 µm aufweisen.

8. Verwendung gemäß einem der Ansprüche 1 bis 6, wobei es sich bei den Partikeln (B) um Lotlegierungskugeln vom Typ 6, 7 und/oder 8 gemäß der Norm J-STD-005 handelt.

9. Verwendung gemäß einem der vorhergehenden Ansprüche, wobei die Legierungen der Partikel (B) Indium und/oder Zinn in einem Gesamtmengenanteil von 30 bis 100 Gew.-% enthalten.

10. Verwendung gemäß einem der vorhergehenden Ansprüche, wobei die Legierungen der Partikel (B) ausgewählt sind aus der Gruppe bestehend aus Bi33.7In66.3, Bi67In33, Sn48In52, Sn50In50, Sn52In48, Sn58In42, In97Ag3, Bi40Sn60, Bi32.5Sn16.5In51, Bi57Sn17In26 und Bi58Sn42.

11. Verwendung gemäß einem der vorhergehenden Ansprüche, wobei das härtbare Harzsystem (C) ein selbstvernetzbares Epoxidharz oder ein System aus Epoxidharz und Härter für das Epoxidharz ausgewählt unter Polyaminhärtern, Polycarbonsäure-Härtern und Polycarbonsäureanhydrid-Härtern umfasst.

12. Verwendung gemäß einem der vorhergehenden Ansprüche, wobei das Bauteil ausgewählt ist aus der Gruppe bestehend aus Dioden, LEDs, Chips, IGBTs, MOSFETs, ICs, Sensoren, Verbindungselementen, Kühlkörpern, Bodenplatten, Widerständen, Kondensatoren, Induktoren und Antennen.

13. Verwendung gemäß einem der vorhergehenden Ansprüche, wobei das Substrat ausgewählt ist aus der Gruppe bestehend aus Leadframes, PCBs, flexibler Elektronik, Keramiksubstraten, Metallkeramiksubstraten und IMS.

## Claims

1. Use of an electrically conductive composition containing the constituents:
(A1a) 30 to 50% by weight of electrically conductive particles with an average particle size in the range of from 1 to 25 µm and an aspect ratio in the range of from 5 to 30 : 1 and (A1b) 20 to 60% by weight of non-metallic particles with an average particle size in the range of from 1 to 25 µm and an aspect ratio in the range of from 1 to 3 : 1
or
(A2a) 70 to 90% by weight of electrically conductive particles and (A2b) 0 to 15% by weight of non-metallic particles,
(B) 5 to 25% by weight of particles different from (A1a) and (A2a) of an alloy, which melts in the range of from 50 to 180 ^{∼}C and which contains indium and/or tin,
(C) 5 to 25% by weight of a curable resin system, and
(D) 0 to 10% by weight of at least one additive,
for adhering a component to a substrate across the contact surfaces thereof,
wherein at least one of the contact surfaces is a tin contact surface, and
wherein the electrically conductive composition is free from substances with one or several cyanate groups.

2. The use according to claim 1, wherein the % by weight add up to 100% by weight.

3. The use according to claim 1 or 2, wherein the electrically conductive particles (A1a) are selected from the group consisting of silver (alloy) particles, gold (alloy) particles, aluminium (alloy) particles, copper (alloy) particles, metal-coated metal particles, and metal-coated glass particles.

4. The use according to claim 1, 2, or 3, wherein the non-metallic particles (A1b) are selected from the group consisting of particles of glass particles, ceramic particles, plastic particles, diamond particles, boron nitride particles, silicon dioxide particles, silicon nitride particles, silicon carbide particles, aluminosilicate particles, aluminium oxide particles, aluminium nitride particles, zirconium oxide particles, and titanium dioxide particles.

5. The use according to claim 1 or 2, wherein the electrically conductive particles (A2a) are selected from the group consisting of silver (alloy) particles, gold (alloy) particles, aluminium (alloy) particles, copper (alloy) particles, metal-coated metal particles, and metal-coated glass particles.

6. The use according to claim 1, 2, or 5, wherein the non-metallic particles (A2b) are selected from the group consisting of particles of glass particles, ceramic particles, plastic particles, diamond particles, boron nitride particles, silicon dioxide particles, silicon nitride particles, silicon carbide particles, aluminosilicate particles, aluminium oxide particles, aluminium nitride particles, zirconium oxide particles, and titanium dioxide particles.

7. The use according to any one of the preceding claims, wherein the particles (B) have an average particle size in the range of from 1 to 15 µm.

8. The use according to any one of claims 1 to 6, wherein the particles (B) are solder alloy balls of the type 6, 7 and/or 8 according to the standard J-STD-005.

9. The use according to any one of the preceding claims, wherein the alloys of the particles (B) contain indium and/or tin in a total proportion of 30 to 100% by weight.

10. The use according to any one of the preceding claims, wherein the alloys of the particles (B) are selected from the group consisting of Bi33.7In66.3, Bi67In33, SN48In52, Sn50In50, Sn52In48, Sn58In42, In97Ag3, Bi40Sn60, Bi32.5Sn16.5In51, Bi57Sn17In26, and Bi58Sn42.

11. The use according to any one of the preceding claims, wherein the curable resin system (C) comprises a self-crosslinkable epoxy resin or a system of epoxy resin and curing agent for the epoxy resin, selected among polyamine curing agents, polycarboxylic acid curing agents, and polycarboxylic acid anhydride curing agents.

12. The use according to any one of the preceding claims, wherein the component is selected from the group consisting of diodes, LEDs, chips, IGBTs, MOSFETs, ICs, sensors, connecting elements, cooling elements, base plates, resistors, capacitors, inductors, and antennas.

13. The use according to any one of the preceding claims, wherein the substrate is selected from the group consisting of leadframes, PCBs, flexible electronics, ceramic substrates, metal ceramic substrates, and IMS.

## Revendications

1. Utilisation d'une composition électroconductrice comprenant les composants :
(A1a) 30 à 50% en poids de particules électroconductrices dont la taille moyenne est comprise entre 1 et 25 µm et le rapport d'aspect est compris entre 5 et 30 : 1 et (A1b) 20 à 60% en poids de particules non métalliques dont la taille moyenne est comprise entre 1 et 25 µm et le rapport d'aspect est compris entre 1 et 3 : 1
ou
(A2a) 70 à 90% en poids de particules électroconductrices et (A2b) 0 à 15% en poids de particules non métalliques,
(B) 5 à 25% en poids de diverses particules (A1a) et (A2a) issues d'un alliage en fusion à une température entre 50 et 180°C, contenant de l'indium et/ou de l'étain,
(C) 5 à 25% en poids d'un système de résine durcissable et
(D) 0 à 10% en poids au moins d'un additif
pour le collage d'un composant avec un substrat par leurs surfaces de contact,
au moins l'une des surfaces de contact étant une surface de contact en étain,
et
la composition électroconductrice étant exempte de substances contenant un ou plusieurs groupes cyanate.

2. Utilisation conformément à la revendication 1, les % en poids s'ajoutant aux 100% en poids.

3. Utilisation conformément à la revendication 1 ou 2, les particules électroconductrices (A1a) étant sélectionnées dans le groupe composé de particules (d'alliage) d'argent, particules (d'alliage) d'or, particules (d'alliage) d'aluminium, particules (d'alliage) de cuivre, particules métalliques revêtues de métal et particules de verre revêtues de métal.

4. Utilisation conformément à la revendication 1, 2 ou 3, les particules non métalliques (A1b) étant sélectionnées dans le groupe composé de particules issues de particules de verre, particules de céramique, particules de matière synthétique, particules de diamant, particules de nitrure de bore, particules de dioxyde de silicium, particules de nitrure de silicium, particules de carbure de silicium, particules d'aluminosilicate, particules d'oxyde d'aluminium, particules de nitrure d'aluminium, particules d'oxyde de zirconium et particules de dioxyde de titane.

5. Utilisation conformément à la revendication 1 ou 2, les particules électroconductrices (A2a) étant sélectionnées dans le groupe composé de particules (d'alliage) d'argent, particules (d'alliage) d'or, particules (d'alliage) d'aluminium, particules (d'alliage) de cuivre, particules métalliques revêtues de métal et particules de verre revêtues de métal.

6. Utilisation conformément à la revendication 1, 2 ou 5, les particules non métalliques (A2b) étant sélectionnées dans le groupe composé de particules issues de particules de verre, particules de céramique, particules de matière synthétique, particules de diamant, particules de nitrure de bore, particules de dioxyde de silicium, particules de nitrure de silicium, particules de carbure de silicium, particules d'aluminosilicate, particules d'oxyde d'aluminium, particules de nitrure d'aluminium, particules d'oxyde de zirconium et particules de dioxyde de titane.

7. Utilisation conformément à l'une des revendications précédentes, les particules (B) présentant une taille moyenne comprise entre 1 et 15 µm.

8. Utilisation conformément à l'une des revendications 1 à 6, les particules (B) étant des billes d'alliage de soudure de type 6, 7 et/ou 8 conformément à la norme J-STD-005.

9. Utilisation conformément à l'une des revendications précédentes, les alliages des particules (B) contenant de l'indium et/ou de l'étain dans une proportion globale de 30 à 100% en poids.

10. Utilisation conformément à l'une des revendications précédentes, les alliages des particules (B) étant sélectionnés dans le groupe composé de Bi33.7In66.3, Bi67In33, Sn48In52, Sn50In50, Sn52In48, Sn58In42, In97Ag3, Bi40Sn60, Bi32.5Sn16.5In51, Bi57Sn17In26 et Bi58Sn42.

11. Utilisation conformément à l'une des revendications précédentes, le système de résine durcissable (C) étant une résine époxy auto-réticulable ou un système en résine époxy et durcisseur pour la résine époxy, sélectionné parmi les durcisseurs de type polyamine, les durcisseurs de type acide polycarboxylique et les durcisseurs de type anhydride d'acide polycarboxylique.

12. Utilisation conformément à l'une des revendications précédentes, le composant étant sélectionné dans le groupe composé de diodes, LED, puces, IGBT, MOSFET, IC, capteurs, éléments de liaison, corps de refroidissement, plaques de fond, résistances, condensateurs, inducteurs et antennes.

13. Utilisation conformément à l'une des revendications précédentes, le substrat étant sélectionné dans le groupe composé de leadframes, PCB, électronique flexible, substrats en céramique, substrats en métal-céramique et IMS.
